# EUROPÄISCHE PATENTANMELDUNG

(11) **EP 0 714 080 A1**
(43) Veröffentlichungstag der Anmeldung: **29.05.1996**
(21) Anmeldenummer: 94890194.7
(22) Anmeldetag: 24.11.1994
(51) Int. Cl.: G07F 7/02, G06F 17/60

(54) **Vorrichtung zur Datenübertragung zwischen mobilen Datenbearbeitungsterminals und stationären Datenverarbeitungsstationen**

(71) Anmelder: WALLA MASCHINEN Gesellschaft m.b.H. & Co, A-4840 Vöcklabruck (AT)
(72) Erfinder: Polednak, Peter, A-5303 Thalgauberg 89 (AT)
(74) Vertreter: Holzer, Walter, Dipl.-Ing.

(57) **Zusammenfassung**

Vorrichtung zur Datenübertragung zwischen mobilen Datenbearbeitungsterminals (14) und stationären Datenverarbeitungsstationen (17-20), insbesondere für den Schank- und Restaurationsbetrieb, mit einem als temporärer Datenträger dienenden, einen Schreib/Lese-Speicher enthaltenden Schlüssel (1), einem an eine Schnittstelle des mobilen Datenbearbeitungsterminals (14) elektrisch anschließbaren Schloß (5) und einem an eine Schnittstelle der stationären Datenverarbeitungsstation (17-20) elektrisch anschließbaren weiteren Schloß (5), wobei der Schlüssel wahlweise in das eine oder das andere Schloß mechanisch einsteckbar ist und zur Datenübertragung zwischen Schlüssel und Schloß eine zwischen Schlüssel und Schloß verteilte berührungslose elektrische Schnittstelle (6, 7) vorgesehen ist.

## Beschreibung

Die vorliegende Erfindung betrifft eine Vorrichtung zur Datenübertragung zwischen mobilen Datenbearbeitungsterminals und stationären Datenverarbeitungsstationen, insbesondere für den Schank- und Restaurationsbetrieb.

Mobile Datenerfassungsterminals haben derzeit einen gravierenden Nachteil: Die bekannten Vorrichtungen zur Datenübertragung zwischen dem mobilen Handterminal und einer stationären Datenverarbeitungsanlage sind für den Einsatz in der Praxis, insbesondere im Schank- und Restaurationsbetrieb, nicht robust, störungssicher und bedienungsfreundlich genug, abgesehen von drahtlosen Übertragungsstrecken, die allerdings nur mit hohem technischen Aufwand realisierbar sind.

Die Erfindung setzt sich daher zum Ziel, eine Vorrichtung zur Datenübertragung zwischen mobilen Datenbearbeitungsterminals und stationären Datenverarbeitungsstationen, insbesondere für den Schank- und Restaurationsbetrieb, zu schaffen, die robust, einfach handhabbar und störungsunanfällig ist. Dieses Ziel wird mit einer Vorrichtung der genannten Art erreicht, die erfindungsgemäß gekennzeichnet ist durch einen als temporärer Datenträger dienenden, einen Schreib/Lese-Speicher enthaltenden Schlüssel, ein an eine Schnittstelle des mobilen Datenbearbeitungsterminals elektrisch anschließbares Schloß und ein an eine Schnittstelle der stationären Datenverarbeitungsstation elektrisch anschließbares weiteres Schloß, wobei der Schlüssel wahlweise in das eine oder das andere Schloß mechanisch einsteckbar ist und zur Datenübertragung zwischen Schlüssel und Schloß eine zwischen Schlüssel und Schloß verteilte berührungslose elektrische Schnittstelle vorgesehen ist. Dadurch läßt sich eine völlig neue Art von Datenübertragungssystem realisieren, die speziell an die Anforderungen im Schank- und Restaurationsbetrieb angepaßt ist: Der Kellner setzt seinen persönlichen Schlüssel in das Schloß eines verfügbaren mobilen Datenbearbeitungsterminals ein und nimmt mit letzterem die Bestellung des Gastes entgegen. Die aufgenommenen Daten werden im Schlüssel gespeichert. Nach der Rückkehr in die Küche oder die Schank setzt der Kellner seinen persönlichen Schlüssel in das Schloß einer verfügbaren stationären Datenverarbeitungsstation ein und spielt die im Schlüssel gespeicherten Bestelldaten in das Bestell- und Kassensystem des Restaurants ein. Bei rechnergesteuerten Schankanlagen können nach diesen Daten Getränke automatisch dosiert und/oder zubereitet werden. Im Gegenzug zur Übertragung der Bestelldaten vom mobilen Datenbearbeitungsterminal zur stationären Datenverarbeitungsanlage können von letzterer die Daten für die Rechnung des Gastes in den Schlüssel zurückgeschrieben werden und sind nach Einsetzen des Schlüssels im mobilen Datenbearbeitungsterminal für den Kellner verfügbar. Gleichzeitig können auch Aktualisierungsinformationen über die verfügbaren Speisen und Getränke auf diesem Wege von der stationären Datenverarbeitungsanlage zu den mobilen Datenbearbeitungsterminals hin übertragen werden.

Auf Grund der zwischen Schlüssel und Schloß verteilten berührungslosen elektrischen Schnittstelle, d.h. des Verzichtes auf freiliegende Kontakte, ist eine äußerst robuste, beispielsweise eingekapselte Ausführung von Schlüsseln und Schlössern möglich. Die Verwendung eines Schlüssels an sich stellt einen Akzeptanzvorteil im Restaurations- und Schankbetrieb dar, weil das Personal an den Umgang mit persönlichen Kassenschlüsseln gewöhnt ist und das System keine Eingriffe in den eingespielten Tätigkeitsablauf erfordert. Gleichzeitig ist gewährleistet, daß die in das Kassensystem eingespielten Bestell- und Rechnungsdaten eindeutig einem bestimmten Kellner zugeordnet werden können. Wenn eine rechnergesteuerte Schankanlage vorhanden ist, werden durch die automatische Übertragung der Bestelldaten vom Schlüssel auch Manipulationen der Schankanlage erschwert.

Eine wegen ihrer mechanischen Robustheit besonders zu bevorzugende Ausführungsform des Schlüssels weist einen im wesentlichen kegelförmigen Oberteil auf, dessen Basis in einen schalenförmigen Flanschteil eingesetzt ist, welcher sich auf der gegenüberliegenden Seite in einem axialen Paßstift für den formschlüssigen Eingriff in das Schloß fortsetzt, wobei in dem Hohlraum zwischen der Basisseite des Oberteiles und dem Schalenboden des Flanschteiles der eine Teil der berührungslosen elektrischen Schnittstelle aufgenommen ist. In diesem Fall zeichnet sich eine mechanisch robuste Schloßkonfiguration dadurch aus, daß das Schloß eine Buchse zur Aufnahme des Paßstiftes des Schlüssels aufweist, welche eingangsseitig zu einem Ringflansch zur Anlage des Flanschteiles des Schlüssels erweitert ist, wobei der Ringflansch den anderen Teil der berührungslosen elektrischen Schnittstelle enthält.

Bevorzugt ist die berührungslose elektrische Schnittstelle eine Schnittstelle mit induktiver Kopplung. Diese Art von Schnittstelle ist einfach zu realisieren, verhältnismäßig störungsunanfällig und erzeugt selbst keine Störungen in benachbarten Geräten.

Weitere vorteilhafte Ausgestaltungen der Erfindung bestehen darin, die mechanische Verbindung zwischen Schlüssel und Schloß magnetisch einrastbar zu gestalten, indem vorzugsweise die Spitze des Schlüssels ein ferromagnetisches Metallstück und der Boden des Schlüssels einen Permanentmagneten aufweist. Dies stellt eine weitgehend verschmutzungsunanfällige Art der temporären Verriegelung des Schlüssels im Schloß dar.

Die Erfindung wird nachstehend an Hand eines in den Zeichnungen dargestellten Ausführungsbeispieles näher erläutert, wobei
Fig. 1 einen Längsschnitt durch die erfindungsgemäße Schlüssel/Schloß-Kombination und
Fig. 2 ein Blockschaltbild des damit realisierbaren Datenverarbeitungs-systemes zeigt.

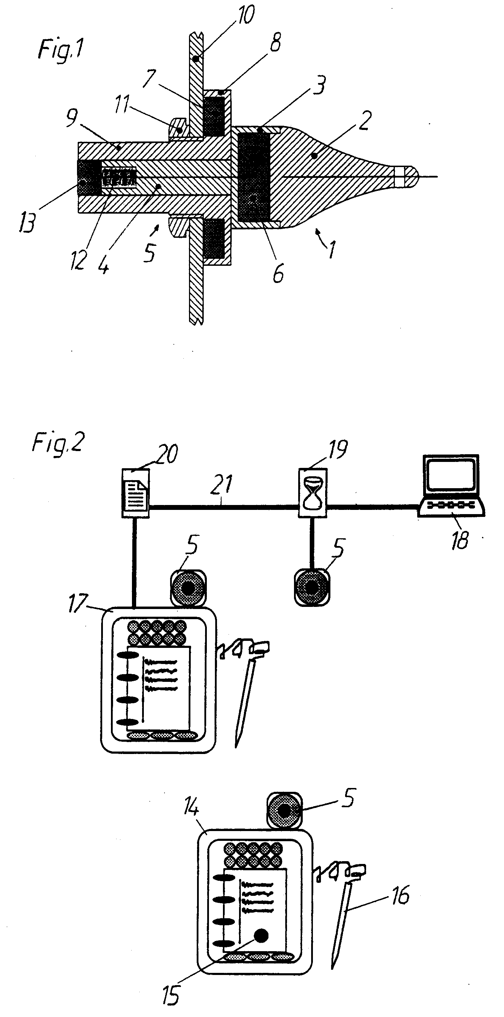

Der in Fig. 1 gezeigte Schlüssel 1 weist einen im wesentlichen kegelförmigen Oberteil 2 auf, dessen Basis in einen schalenförmigen Flanschteil 3 eingesetzt ist, welcher sich auf der gegenüberliegenden Seite in einem axialen Paßstift 4 für den formschlüssigen Eingriff in ein Schloß 5 fortsetzt. In dem Hohlraum zwischen der Basisseite des Oberteiles 2 und dem Schalenboden des Flanschteiles 3 sind der eine Teil 6 einer nicht näher dargestellten berührungslosen elektrischen Schnittstelle und ein ebenfalls nicht näher dargestellter, mit dieser in Verbindung stehender Schreib/Lese-Speicher aufgenommen.

Der andere Teil 7 der berührungslosen elektrischen Schnittstelle ist in einem Ringflansch 8 des Schlosses 5 aufgenommen, welcher für die Anlage des Flanschteiles 3 des Schlüssels 1 bestimmt ist. Zu diesem Zweck setzt sich der Ringflansch 8 auf der gegenüberliegenden Seite in einer axialen Buchse 9 fort, welche den Formschluß mit dem Paßstift 4 des Schlüssels 1 eingeht.

Bei der dargestellten Konstruktion durchsetzt die Buchse 9 eine Öffnung in einer Wand 10 eines nicht weiter dargestellten Gerätegehäuses, z.B. des Gehäuses eines mobilen Datenbearbeitungsterminals, einer stationären Datenverarbeitungsstation oder einer rechnergesteuerten Schankanlage. Das Schloß 5 ist mit Hilfe einer auf ein Außengewinde der Buchse 9 aufgezogenen Befestigungsmutter 11 so festgelegt, daß die Gehäusewand 10 zwischen Ringflansch 8 und Befestigungsmutter 11 eingespannt ist.

Zur temporären Verriegelung des Schlüssels im Schloß für die Zeit der Datenübertragung ist in die Spitze des Paßstiftes 4 des Schlüssels 1 ein ferromagnetisches Metallstück 12 eingebettet, und der Boden der Buchse 9 des Schlosses 5 weist einen Permanentmagneten 13 auf. Selbstverständlich ist anstelle eines Permanentmagneten auch ein Elektromagnet vorstellbar, der für die Zeit der Datenübertragung aktiviert wird, um ein unbeabsichtigtes Lösen der Schlüssel/Schloß-Verbindung zu verhindern.

Die berührungslose elektrische Schnittstelle 6, 7 arbeitet mit induktiver Kopplung und ist beispielsweise von jener Art, die in der AT-PS 395 224 beschrieben ist. Die Ausbildung dieser Schnittstelle ist nicht Gegenstand der Erfindung und für Details wird auf diese Patentschrift verwiesen.

Fig. 2 zeigt das Blockschaltbild einer Anwendung der Schlüssel/Schloß-Kombination aus Fig. 1. Es ist ein mobiles Datenbearbeitungsterminal 14 mit einer graphischen Bedienungsoberfläche 15 und einem Eingabestift 16 gezeigt, wie es im Handel erhältlich ist. An die serielle Schnittstelle des Datenbearbeitungsterminals 14 ist über einen nicht dargestellten Stecker und nicht dargestellte elektrische Leitungen der Schnittstellenteil 7 eines Schlosses 5 angeschlossen. Wenn die Gehäusewand 10 Teil eines diese elektrischen Steckkontakte tragenden Steckergehäuses ist, kann die elektrische Steckkontaktverbindung gleichzeitig zur mechanischen Befestigung des Schlosses 5 am Datenbearbeitungsterminal 14 dienen.

Weiters sind stationäre Datenverarbeitungsstationen 17 und 18, eine rechnergesteuerte Schankanlage 19 und ein Belegdrucker 20 gezeigt, die über ein stationäres Netzwerk 21 untereinander verbunden sind. Die Datenverarbeitungsstation 17, für welche hier ebenfalls ein Datenbearbeitungsterminal mit graphischer Bedienungsoberfläche und Eingabestifte eingesetzt wird, und die Schankanlage 19 sind mit je einem Schloß 5 ausgestattet. Die Datenübertragung zwischen dem mobilen Datenbearbeitungsterminal 14 und den Komponenten 17 bis 20 des stationären Leitungsnetzes 21 kann nun durch entsprechenden Transfer des in die Schlösser 5 einführbaren Schlüssels 1 durchgeführt werden. Die Datenverarbeitungsstation 18 kann als Zentralrechner das Netzwerk überwachen und Belege und Protokolle am Drucker 20 ausdrucken.

Bei dem dargestellten Beispiel sind nur ein mobiles Datenbearbeitungsterminal 14 und zwei Ankoppelpunkte (Schlösser 5 der Komponenten 17 und 19) an das stationäre Netzwerk gezeigt. Es versteht sich, daß eine Vielzahl von mobilen Terminals und stationären Datenverarbeitungsstationen mit einer Vielzahl von Datenübertragungsschlüsseln vorgesehen sein können. Ferner ist die Anwendung im Schank- und Restaurationsbetrieb nur ein Beispiel. Die beschriebene Schlüssel/Schloß-Kombination kann für jede beliebige Art von Datenübertragung verwendet werden, beispielsweise in persönlichen Identifikationssystemen usw.

## Patentansprüche

1. Vorrichtung zur Datenübertragung zwischen mobilen Datenbearbeitungsterminals und stationären Datenverarbeitungsstationen, insbesondere für den Schank- und Restaurationsbetrieb, gekennzeichnet durch einen als temporärer Datenträger dienenden, einen Schreib/Lese-Speicher enthaltenden Schlüssel (1), ein an eine Schnittstelle des mobilen Datenbearbeitungsterminals (14) elektrisch anschließbares Schloß (5) und ein an eine Schnittstelle der stationären Datenverarbeitungsstation (17-20) elektrisch anschließbares weiteres Schloß (5), wobei der Schlüssel wahlweise in das eine oder das andere Schloß mechanisch einsteckbar ist und zur Datenübertragung zwischen Schlüssel und Schloß eine zwischen Schlüssel und Schloß verteilte berührungslose elektrische Schnittstelle (6, 7) vorgesehen ist.

2. Vorrichtung nach Anspruch 1, dadurch gekennzeichnet, daß der Schlüssel (1) einen im wesentlichen kegelförmigen Oberteil (2) aufweist, dessen Basis in einen schalenförmigen Flanschteil (3) eingesetzt ist, welcher sich auf der gegenüberliegenden Seite in einem axialen Paßstift (4) für den formschlüssigen Eingriff in das Schloß (9) fortsetzt, wobei in dem Hohlraum zwischen der Basisseite des Oberteiles (2) und dem Schalenboden des Flanschteiles (3) der eine Teil (6) der berührungslosen elektrischen Schnittstelle aufgenommen ist.

3. Vorrichtung nach Anspruch 2, dadurch gekennzeichnet, daß das Schloß (5) eine Buchse (9) zur Aufnahme des Paßstiftes (4) des Schlüssels (1) aufweist, welche eingangsseitig zu einem Ringflansch (8) zur Anlage des Flanschteiles (3) des Schlüssels (1) erweitert ist, wobei der Ringflansch (8) den anderen Teil (7) der berührungslosen elektrischen Schnittstelle enthält.

4. Vorrichtung nach einem der Ansprüche 1 bis 3, dadurch gekennzeichnet, daß die berührungslose elektrische Schnittstelle (6, 7) eine Schnittstelle mit induktiver Kopplung ist.

5. Vorrichtung nach einem der Ansprüche 1 bis 4, dadurch gekennzeichnet, daß die mechanische Verbindung zwischen Schlüssel (1) und Schloß (5) magnetisch einrastbar ist.

6. Vorrichtung nach Anspruch 5, dadurch gekennzeichnet, daß die Spitze des Schlüssels (1) ein ferromagnetisches Metallstück (12) und der Boden des Schlosses (5) einen Permanentmagneten (13) aufweist.
